# EUROPEAN PATENT SPECIFICATION

(11) **EP 1 982 503 B1**
(45) Date of publication and mention of the grant of the patent: **22.07.2009**
(21) Application number: 06706562.3
(22) Date of filing: 01.02.2006
(51) Int. Cl.: H04L 29/08, H04B 3/54, B61L 25/02

(54) **METHOD AND A SYSTEM FOR PROVIDING CONNECTIVITY OF A MOVING OBJECT TO A EXTERNAL NETWORK**
VERFAHREN UND SYSTEM ZUR BEREITSTELLUNG VON KONNEKTIVITÄT EINES BEWEGLICHEN OBJEKTES ZU EINEM EXTERNEN NETZ
PROCÉDÉ ET SYSTÈME POUR OBTENIR LA CONNECTIVITÉ D'UN OBJET MOBILE SUR UN RÉSEAU EXTERNE

(43) Date of publication of application: 22.10.2008
(73) Proprietor: Hylton, Jonathan, 2052 Fontainemelon (CH)
(72) Inventor: Hylton, Jonathan, 2052 Fontainemelon (CH)
(74) Representative: Stolmár, Matthias
(86) International application number: PCT/EP2006/000887
(87) International publication number: WO 2007/087826

(56) References cited:
- DE-A1- 10 351 431
- US-A1- 2005 143 868
- US-B1- 6 785 532

## Description

### FIELD OF INVENTION

The present invention refers in general to a method and a system for providing connectivity of a moving object to a external network. More particularly the invention refers to offering high speed Internet access to moving objects that utilize electricity for power and which are powered by a power line like for example trains, trams or streetcars.

### DESCRIPTION OF PRIOR ART

Internet connectivity plays a major role in our daily life. Besides the effect of having access to an almost unlimited amount of information via the World Wide Web an ever increasing part of communication takes place by using the Internet. This includes e-mails, chat rooms, voice-over-ip telephoning solutions, video conferencing and so on. The various possible applications are unnumbered and are used for both leisure and business activities.

In view of the increasing mobility there is thus an enormous demand for having the possibility to connect to the Internet whenever or wherever wanted. Especially business commuters and other people traveling regularly on trains or similar means of transport like trams, streetcars, subways etc. would highly appreciate having the possibility to be "on-line" during their travel-time.

In this context stationary solutions for connecting to the Internet or similar networks, e.g. W-LAN hotspots, Internet cafes and so on, are already widely used and offer reliable connectivity to the respective user.

However, offering the same reliable connectivity to users traveling in a moving object still poses considerable technical problems. Due to the motion of the respective object, there is no possibility to establish a connection of the object to the external network by simply using usual physical carriers in form of cables and plugs etc.

One proposed system which uses a power line for data transfer to the moving object is disclosed in US 2005/0143868.

Thus several systems have been proposed which in principle all use some sort of wireless connection between the moving object and the specific network.

In this context for example solutions using cellular phone networks or UMTS-networks have recently been realized. Also satellite communications are used to deliver broadband Internet access to a train's onboard system.

However, since the moving object may travel at a considerable speed, rather complicated technical solutions have to be provided in order to enable accurate and reliable switching between the respective wireless network cells used to transfer the data in case of using a cellular phone network.

Satellite based Internet connections on the other hand are also accompanied by complicated technology and high costs.

Thus there remains a need to provide a reliable network connectivity to a moving object by using rather simple and cheap technological means.

Therefore it is an object of the present invention to provide a reliable simple and cheap method and system for connecting a moving object to an external network.

### SUMMARY OF THE INVENTION

The method for providing connectivity of a moving object to an external network according to the present invention makes use of the fact that most of the relevant moving objects like trains etc. utilize electricity for power and are thus powered by and connected to a power line. Thus by providing at least two stationary connection points being connected to the external network on the one hand and to the power line on the other hand, using the power line as a carrier in order to transfer data from the external network to the moving object and/or from the moving object to the external network, selecting one stationary connection point of the stationary connection points, wherein the selection depends on the current position of the moving object, and routing the data to be transferred over the selected stationary connection point in accordance to the method of the present invention it is possible to establish a reliable network connection between the moving object and the external network.

The external network in this context may be preferably the Internet or any other suitable network. Thus it may also be possible to connect the moving object to an Intranet of a specific company.

The use of the power line as a carrier for data transmission can be accomplished by turning the power line into a large Broadband over Power Line (BPL) network. The Broadband over Power Line (BPL) concept is a wireline technology that is able to use current electricity networks for data and voice transmission. The carrier can communicate voice and data by superimposing an analog signal over the standard 50 or 60 Hz alternating current (AC). Traditionally electrical utilities used low-speed power-line carrier circuits for control of substations, voice communication, and protection of high-voltage transmission lines. More recently, high-speed data transmission has been developed using the lower voltage transmission lines used for power distribution. By using microwave frequencies transmitted via a newly discovered surface wave propagation mechanism even higher speed transmissions have been demonstrated using only a single power line conductor. These systems have shown the potential for symmetric and full duplex communication in excess of 1 Gbit/s in each direction. Multiple wireless LAN channels as well as simultaneous analog television in the 2.4 and 5.3 GHz unlicensed bands have been demonstrated operating over medium voltage lines.

In this context it is noted that a BPL network may of course be installed on a power line using direct current (DC).

The use of the power line being always present in order to power the moving object is especially advantageous since there is no need for installing additional infrastructure to transfer the data between the moving object and the external network.

According to the present invention the connection of the moving object to the external network is done via two separate networks that are, however, transparent to the end user. The electrical network (BPL network) of the moving object will act as the customer facing network and will handle the transmission and receiving of data for a user within the moving object.

The long haul network consists of several telecommunications leased line circuits connected to the BPL network via the stationary connection points. The connection of the stationary connection points to the external network may thus be established by usual means, e.g. cable based DSL or fiber optic technologies.

In case of a train or a similar moving object, i.e. a vehicle used for public transport, the connection points may preferably be located within local train stations along the travel path of the moving object. However, in may also be possible to provide the stationary connection points at arbitrary points along the travel path of the moving objects. In has to be noted that the stationary connection points do not necessarily have to be provided in close proximity to the travel path as long as they can be connected to the power line of the moving object.

By providing at least two stationary connection points it is possible to switch the routing of the transferred data from one connection point to another depending of the current position of the moving object. Thus the network traffic may be streamlined in order to achieve the fastest possible connection.

In a preferred embodiment of the present invention the current position of the moving object is determined by using global positioning system (GPS) tracking. In this case the moving object will be provided with a GPS-receiver. Of course there are various other solutions on how to determine the current position of a moving object which may equally be used with the present invention. For example the moving object may be provided with an emitter instead of a GPS-receiver. The signal of the emitter may be received by a respective network of receivers and the position of the moving object may be determined by a common triangulation. If the moving object travels along a predetermined path, the current position may also be roughly determined by a simple calculation using the known speed of the object and the time of travel.

Once the current position of the moving object has been determined, the most suitable stationary connection point for routing of the data to be transferred is selected. In this context the most suitable stationary connection point may be chosen to be the closest one from the current position of the moving object in view of the linear distance.

However, there may be situations in which the closest connection point in view of the linear distance does not represent the connection point with the shortest connection distance and thus will not be regarded as the most suitable connection point. For example a train moving in serpentines may be very close to a specific connection point in view of the linear distance. However, the actual connection distance to this specific connection point is determined by the length of the power line between the moving object and the connection point and therefore by the distance along the actual travel path of the train and may thus be considerable longer.

Therefore if the moving object is heading along a predetermined path preferably the stationary connection point being closest to the current position of the moving object along the predetermined path is selected for routing.

Within the moving object connectivity may be provided by usual means, preferably by use of wireless LAN technology. In this case, wireless access points are strategically positioned within the moving object. Thus each moving object will act as a traveling network of its own.

In case of a train as moving object, each passenger car may be provided with a wireless access point while the BPL connection point for transferring data from within the moving object to the BPL network and vice versa is preferably located in the power car. This BPL connection point may include a computer with the ability to act as a DHCP server.

The access to the network within the moving object may be restricted to predetermined users in order to enable the operator of the network service to provide its services in exchange for a respective payment.

In this context the decision whether a user belongs to the predetermined users preferably depends on an information to be entered by the user when trying to connect to the network within the moving object.

A possible information to be entered may include a username and password. In this context cards providing an username and password for an account with a predetermined connection time may be purchased either within the moving object, e.g. from train kiosk's and from train food vendors, or at other vending points, e.g. within the train stations.

It may also possible to already include a predetermined connection time when buying the ticket for the transportation.

Alternatively customers may be able to sign up for long term user agreement. This signing up may be made via an Internet web site and may offer for example a monthly subscription rate.

In case the user wants to connect its own computer/laptop to the network, the information to be entered may include the physical address of the computer with which the connection to the network is effected. This address may then be used as a Media Access Control (MAC) address in the network.

Thus after having registered as a user in a long term user agreement and having provided the physical address of the computer to be used for a connection to the network, the specific computer of the user may be identified and access may be granted by entering the physical address of the computer.

The physical address of the computer trying to connect to the network is preferably determined automatically during the connection procedure. Thus the respective user may connect to the network without putting in any username or password as the MAC address, i.e. the physical address of the computer will be the unique identifier.

Alternatively or additionally it may be necessary to enter information referring to means for effecting a payment like a credit card number, a Paypal account and so on. If trying to connect to the wireless network once on the moving obj ect, the user will in this case automatically be directed to a web page asking for the respective payment information to be entered.

### BRIEF DESCRIPTION OF THE DRAWINGS

The accompanying drawings, which are included to provide a further understanding of the invention and which are incorporated in and constitute a part of this application, illustrate an embodiment of the invention and together with the respective description serve to explain the principle of the invention. In the drawings:
- FIG. 1: shows the network structure of an embodiment of the present invention, in which a train as a moving object is connected to the Internet by using the system and the method according to the present invention; and
- FIG. 2: shows the network connectivity within the train of the embodiment of the present invention according to Fig. 1.

### DETAILED DESCRIPTION OF THE PREFERRED EMBODIMENT

Reference will now be made in detail to the preferred embodiment of the present invention, examples of which are illustrated in the accompanying drawings. Wherever possible, the same reference numbers will be used throughout the drawings to refer to the same or similar parts.

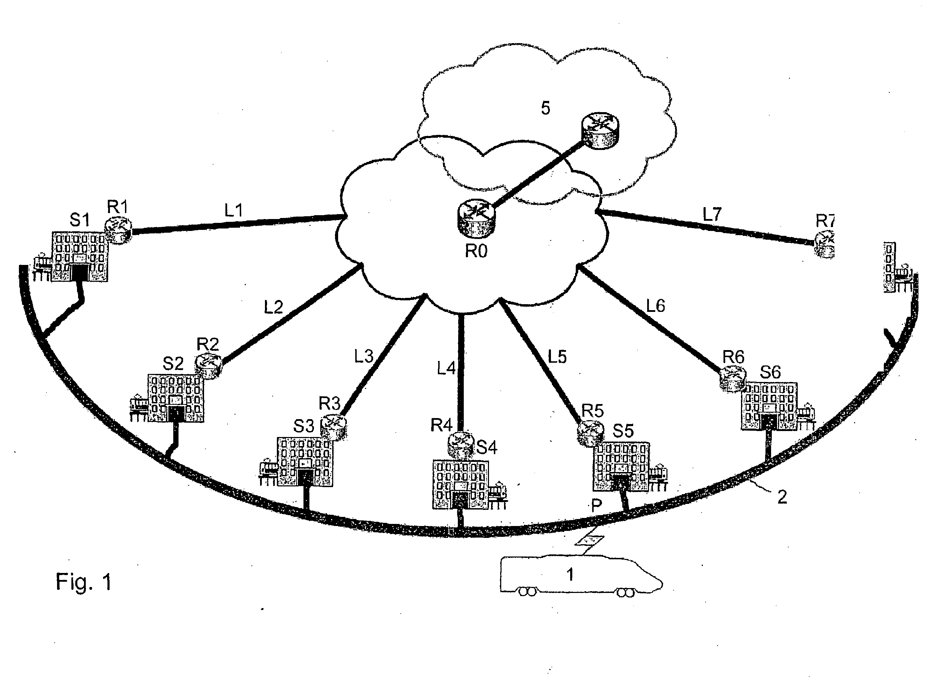

Fig. 1 shows the network structure of an embodiment of the present invention. The moving object, in this embodiment the train 1 is moving along a predetermined path. The train 1 uses electricity for power and is thus in constant contact with the power line 2 during its travel along the predetermined path.

Several trains stations S1- S7 are situated along the path of train 1 and act as stationary connection points in accordance of the present invention. Thus the trains stations S1- S7 are connected to the power line 2 as well as to the external network, which in the present case is the Internet 5.

The power line 2 of the train 1 is used as a carrier to provide network connectivity between the train 1 and the train stations S1 - S7. Thus a Broadband Power Line (BPL) network is established between the train 1 and the train stations S1 - S7.

Every train station S1 - S7 includes its own router R1 - R7 being connected by a regular line L1 - L7 respectively to the main router R0 of the electrical train Internet service. The main router R0 itself is connected to the Internet 5 by usual means, e.g. via an Internet backbone of a local telecommunications provider using a DSL line or fiber optic connections.

Thus the actual network structure in the present embodiment according to the invention consists of two separate networks being transparent for the user on the train. On the one hand the BPL-network, being formed by the train 1 and the train stations S1 - S7 via the power line 2, and on the other hand the network connecting the train stations S1 - S7 to the Internet, being formed by a usual long haul network.

The BPL-network will thus act as the customer facing network and will handle the transmission and receiving of data for the user on the train 1. In this context the BPL-network will carry the Internet traffic the last mile to the train passenger requesting the data.

In the present embodiment the current position P of the train 1 along the predetermined path, which is needed to determine over which of the train stations S1 - S7 the data traffic will be routed, is made via GPS-tracking. Thus the train 1 is equipped with a GPS receiver.

Once the current position P of the train 1 is determined the BPL-connection equipment of train 1 will decide, which station will be selected for the actual routing at the given moment. This decision is based on the distance between the train 1 and the various train stations S1 - S7 along the predetermined path and routing will take place via the closest train station. In the situation shown in Fig. 1 routing will thus take place via the train station S5.

In order to keep the same network address for a computer of a user being connected to the network via the train 1 when roaming between two train stations takes place, the different train stations S1 - S7 use different channels within the specifications of a 802.11x roaming network.

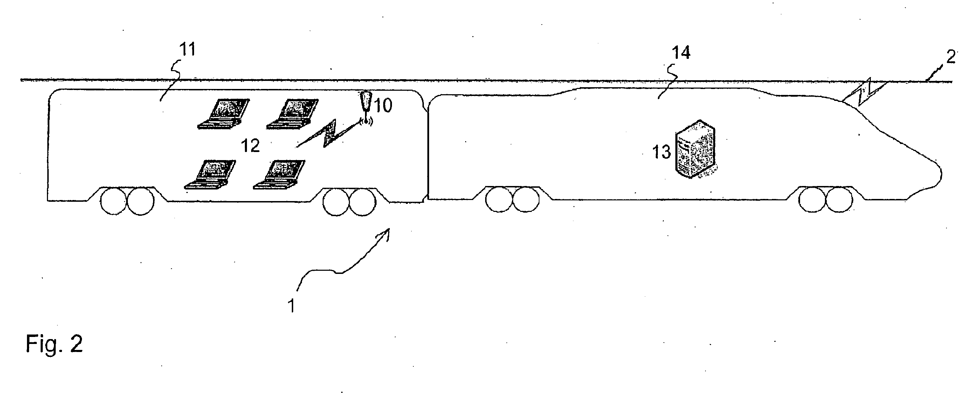

As for the connectivity within train 1, the present embodiment of the invention takes advantage of wireless access points. As can be seen in Fig. 2 wireless access points 10 are strategically placed within the train cars 11. Thus customers will be able to communicate with these wireless access points 10 with their own notebooks 12 by using a standard 802.11x WLAN card.

Alternatively or additionally there may be provided usual plug connections in the train cars 11 so that users with normal, i.e. non wireless, network cards may connect to the network within train 1 as well.

To handle the network within the train 1 and to pass on the data to the BPL network, the train 1 comprises a BPL train connection point 13, which in the present example includes a computer acting as a DHCP server. According to the shown embodiment the BPL connection point 13 is located in the power car 14 of train 1.

Thus each single train will be its own "Traveling" network. By doing this, this will allow all train passengers routing to be handled while being on the train 1. The trains BPL connection equipment 13 will handle all routing between the train 1 and the BPL Network .

With regard to the payment of given the service, i.e. providing the Internet access on the train 1, various possibilities exist. In principle all payment solutions already known from wireless telecommunication providers may be employed. This includes the use of prepaid cards as well as long term agreements between the user and the service provider. The latter may be especially advantageous for business users or frequent travelers like commuters.

Thus users on the train 1 may have to enter a username and/or password in order to connect to the network within the train 1. The respective username and/or password may either be provided on the prepaid card or will be assigned when signing the long term agreement.

Alternatively a login may also be possible for users having not signed an agreement or bought a prepaid card. In this case a payment information like a credit card number or a Paypal account or the like will have to be entered before having access to the network within the train 1.

To simplify the login-procedure for users using their own notebook and having signed a long term agreement with the service provider, the respective user can provide the unique physical address of its computer when signing up. Thus, this address may be used as a Media Access Control (MAC) address within the network and may be read out automatically when connecting to the network to identify the respective user.

Although the described example of a train 1, and thus a public transportation device as a moving object in the sense of the present invention may be regarded as the most obvious application of the present invention a person skilled in the arts will appreciate that the method and system according to the present invention may as well be applied to a various other situations, in which electrically powered moving objects are to be connected to an external network.

For example the method or the system according to the present invention may be used to connect automatically driven service or surveillance vehicles to a network, i.e. making it possible to read out data online without the need of a wireless communication. One possible field of application in this context may regard service vehicles used in connection with the laying or testing of oil or gas pipelines.

### REFERENCE SIGNS

- 1: train
- 2: power line
- S1-S7: train stations
- R0: main router
- R1-R7: routers of the train stations
- L1-L7: lines connecting the routers of the train stations to the main router
- 5: Internet
- P: current position of train 1
- 10: wireless LAN access point
- 11: passenger car of train 1
- 12: laptops of users
- 13: BPL connection point
- 14: power car of train 1

## Claims

1. Method for providing connectivity of a moving object which is a vehicle (1) to an external data network (5) wherein the moving object (1) is powered by a power line (2) comprising the steps of
• providing at least two stationary connection points (S1-S7) being connected to the external network (5) and said power line (2);
• using said power line (2) as a carrier in order to transfer data from the external network (5) to the moving object (1) and/or from the moving object (1) to the external network (5);
• selecting one stationary connection point (S5) of said stationary connection points (S1-S7) wherein the selection depends on the current position (P) of the moving object (1);
• routing said data to be transferred over the selected stationary connection point (S5).

2. Method according to claim 1 wherein
the current position (P) of the moving object (1) is determined by use of the global positioning system (GPS) tracking.

3. Method according to claim 1 or claim 2 wherein
the moving object (1) is heading along a predetermined path.

4. Method according to claim 3 wherein
the distance between the current position (P) of the moving object (1) and the stationary connection points (S1-S7) is determined and the stationary connection point (S5) being closest to the current position (P) of the moving object (1) along the predetermined path is selected for routing of the data to be transferred.

5. Method according to one of the preceding claims wherein
connectivity is provided within the moving object (1) by use of wireless LAN technology (10,12,13).

6. Method according to one of the preceding claims wherein
the access to the network within the moving object (1) is restricted predetermined users.

7. Method according to claim 6 wherein
the decision whether a user belongs to the predetermined users depends on an information to be entered by the user when trying to connect to the network within the moving object (1).

8. Method according to claim 7 wherein
the information to be entered includes a specific username and/or password.

9. Method according to claim 7 or claim 8 wherein
the information to be entered includes means for effecting a payment.

10. Method according to one of the clams 7 through 9 wherein
the information to be entered includes the physical address of the computer with which the connection to the network is effected.

11. System for providing connectivity of a moving object which is a vehicle (1) to an external data network (5) comprising
• a power line (2) to power the moving object (1);
• at least two stationary connection points (S1-S7) being connected to the external network (5) and to said power line (2);
• means for using said power line (2) as a carrier for transferring data from the external network (5) to the moving object (1) and/or from the moving object (1) to the external network (5);
• determining means for determining the current position (P) of the moving object (1);
• selection means for selecting one stationary connection point (S5) of said stationary connection points (S1-S7) wherein the selection depends on the determination of the current position (P) of the moving object (1);
• routing means (R5) for routing said data to be transferred over the selected stationary connection point (S5).

12. System according to claim 11 wherein
said determining means include a GPS-receiver.

13. System according to claim 11 or claim 12 wherein
the stationary connection points (S1-S7) are located along a predetermined path of the moving object (1).

14. System according to one of the claims 11 though 13 wherein the system further includes means (13,10) for setting up a network within the moving object (1).

15. System according to claim 14 wherein said means (13,10) for setting up a network within the moving object (1) comprise at least one wireless LAN access point (10).

16. System according to one of the claims 11 though 15 wherein said selection means include means for determining the distance between the current position (P) of the moving object (1) and the stationary connection points (S1-S7) wherein the distance is determined along a predetermined travel path of the moving object (1).

## Patentansprüche

1. Verfahren zum Bereitstellen einer Verbindung eines sich bewegenden Gegenstands (1), der ein Fahrzeug ist, mit einem äußeren Datennetzwerk (5), worin der sich bewegende Gegenstand (1) durch eine Stromleitung (2) angetrieben wird, umfassend die Schritte
• des Bereitstellens von wenigstens zwei stationären Verbindungspunkten (S1-S7), die mit dem äußeren Netzwerk (5) verbunden sind, und die Stromleitung (2);
• des Verwendens der Stromleitung (2) als Träger, um von dem äußeren Netzwerk (5) Daten zu dem sich bewegenden Gegenstand (1) und/oder von dem sich bewegenden Gegenstand zu dem äußeren Netzwerk zu übertragen;
• des Auswählens eines stationären Verbindungspunkts (S5) von den stationären Verbindungspunkten (S1-S7), wobei die Auswahl von der momentanen Position (P) des sich bewegenden Gegenstands (1) abhängt;
• des Routens der zu übertragenden Daten über den ausgewählten stationären Verbindungspunkt (S5).

2. Verfahren nach Anspruch 1, worin die momentane Position (P) des sich bewegenden Gegenstands (1) durch Verfolgen unter Verwendung des globalen Positionsbestimmungssystem (GPS) bestimmt wird.

3. Verfahren nach Anspruch 1 oder 2, worin der sich bewegende Gegenstand (1) entlang einem vorher bestimmten Weg geht.

4. Verfahren nach Anspruch 3, worin der Abstand zwischen der momentanen Position (P) des sich bewegenden Gegenstands (1) und den stationären Verbindungspunkten (S1-S7) bestimmt wird und der stationäre Verbindungspunkt (S5), der am nächsten zur momentanen Position (P) des sich entlang dem vorher bestimmten Weg bewegenden Gegenstands (1) liegt, zum Routen der zu übertragenden Daten ausgewählt wird.

5. Verfahren nach einem der vorhergehenden Ansprüche, worin die Verbindung innerhalb des sich bewegenden Gegenstands (1) durch Verwendung der drahtlosen LAN-Technologie (10, 12, 13) bereitgestellt wird.

6. Verfahren nach einem der vorhergehenden Ansprüche, worin der Zugang zu dem Netzwerk innerhalb des sich bewegenden Gegenstands (1) auf vorher bestimmte Benutzer beschränkt ist.

7. Verfahren nach Anspruch 6, worin die Entscheidung, ob ein Benutzer zu den vorher bestimmten Benutzern gehört, von einer durch den Benutzer einzugebenden Information abhängt, wenn er versucht, sich mit dem Netzwerk innerhalb des sich bewegenden Gegenstands (1) zu verbinden.

8. Verfahren nach Anspruch 7, worin die einzugebende Information einen spezifischen Benutzernamen und/oder ein Passwort umfasst.

9. Verfahren nach Anspruch 7 oder Anspruch 8, worin die einzugebende Information Mittel zum Ausführen einer Zahlung umfasst.

10. Verfahren nach einem der Ansprüche 7 bis 9, worin die einzugebende Information die physikalische Adresse des Computers, mit dem die Verbindung zu dem Netzwerk durchgeführt wird, umfasst.

11. System zum Bereitstellen einer Verbindung eines sich bewegenden Gegenstands (1), der ein Fahrzeug ist, mit einem äußeren Datennetzwerk (5), umfassend
• eine Stromleitung (2) zum Antrieb des sich bewegenden Gegenstands (1);
• wenigstens zwei stationäre Verbindungspunkte (S1-S7), die mit dem äußeren Netzwerk (5) und der Stromleitung (2) verbunden sind;
• Mittel zum Verwenden der Stromleitung (2) als Träger zum Übertragen von Daten von dem äußeren Netzwerk (5) zu dem sich bewegenden Gegenstand (1) und/oder von dem sich bewegenden Gegenstand (1) zu dem äußeren Netzwerk (5);
• Bestimmungsmittel zum Bestimmen der momentanen Position (P) des sich bewegenden Gegenstands (1);
• Auswahlmittel zum Auswählen eines stationären Verbindungspunkts (S5) von den stationären Verbindungspunkten (S1-S7), wobei die Auswahl von der Bestimmung der momentanen Position (P) des sich bewegenden Gegenstands (1) abhängt;
• Routingmittel (R5) zum Routen der über den ausgewählten stationären Verbindungspunkt (S5) zu übertragenden Daten.

12. System nach Anspruch 11, worin die Bestimmungsmittel einen GPS-Empfänger umfassen.

13. System nach Anspruch 11 oder Anspruch 12, worin die stationären Verbindungspunkte (S1-S7) entlang einem vorher bestimmten Weg des sich bewegenden Gegenstands (1) angeordnet sind.

14. System nach einem der Ansprüche 11 bis 13, worin das System weiterhin Mittel (13, 10) zum Aufbau eines Netzwerks innerhalb des sich bewegenden Gegenstands (1) umfasst.

15. System nach Anspruch 14, worin die Mittel (13, 10) zum Aufbau eines Netzwerks innerhalb des sich bewegenden Gegenstands (1) wenigstens einen drahtlosen LAN-Zugangspunkt (10) umfassen.

16. System nach einem der Ansprüche 11 bis 15, worin die Auswahlmittel Mittel zum Bestimmen des Abstands zwischen der momentanen Position (P) des sich bewegenden Gegenstands (1) und der stationären Verbindungspunkte (S1-S7) umfassen, wobei der Abstand entlang eines vorher bestimmten Wegs der Bewegung des sich bewegenden Gegenstands (1) bestimmt wird.

## Revendications

1. Procédé pour assurer la connectivité d'un objet mobile qui est un véhicule (1) à un réseau de données externe (5) dans lequel l'objet mobile (1) est alimenté par une ligne d'alimentation électrique (2) comportant les étapes consistant à :
• fournir au moins deux points de connexion stationnaires (S1 à S7) étant connectés au réseau externe (5) et à ladite ligne d'alimentation électrique (2),
• utiliser ladite ligne d'alimentation électrique (2) en tant que support pour transférer des données du réseau externe (5) vers l'objet mobile (1) et/ou de l'objet mobile (1) vers le réseau externe (5),
• sélectionner un point de connexion stationnaire (S5) parmi lesdits points de connexion stationnaires (S1 à S7), dans lequel la sélection dépend de la position courante (P) de l'objet mobile (1),
• acheminer lesdites données à transférer sur le point de connexion stationnaire sélectionné (S5).

2. Procédé selon la revendication 1, dans lequel la position courante (P) de l'objet mobile (1) est déterminée en utilisant la localisation par le système mondial de positionnement (GPS).

3. Procédé selon la revendication 1 ou la revendication 2, dans lequel l'objet mobile (1) se dirige le long d'un trajet prédéterminé.

4. Procédé selon la revendication 3, dans lequel la distance entre la position courante (P) de l'objet mobile (1) et les points de connexion stationnaires (S1 à S7) est déterminée et le point de connexion stationnaire (S5) étant le plus proche de la position courante (P) de l'objet mobile (1) le long du trajet prédéterminé est sélectionné pour l'acheminement des données à transférer.

5. Procédé selon l'une des revendications précédentes, dans lequel la connectivité est assurée dans l'objet mobile (1) en utilisant une technologie LAN sans fil (10, 11, 12).

6. Procédé selon l'une des revendications précédentes, dans lequel l'accès au réseau dans l'objet mobile (1) est limité à des utilisateurs prédéterminés.

7. Procédé selon la revendication 6, dans lequel il est déterminé si un utilisateur appartient aux utilisateurs prédéterminés en fonction des informations à entrer par l'utilisateur lorsqu'il essaye de se connecter au réseau dans l'objet mobile (1).

8. Procédé selon la revendication 7, dans lequel les informations à entrer incluent un nom d'utilisateur et/ou un mot de passe spécifiques.

9. Procédé selon la revendication 7 ou la revendication 8, dans lequel les informations à entrer incluent des moyens pour effectuer un paiement.

10. Procédé selon l'une des revendications 7 à 9, dans lequel les informations à entrer incluent l'adresse physique de l'ordinateur à l'aide duquel la connexion au réseau est effectuée.

11. Système pour assurer la connectivité d'un objet mobile qui est un véhicule (1) à un réseau de données externe (5) comportant :
• une ligne d'alimentation électrique (2) pour alimenter l'objet mobile (1),
• au moins deux points de connexion stationnaires (S1 à S7) étant connectés au réseau externe (5) et à ladite ligne d'alimentation électrique (2),
• des moyens pour utiliser ladite ligne d'alimentation électrique (2) en tant que support pour transférer des données du réseau externe (5) vers l'objet mobile (1) et/ou de l'objet mobile (1) vers le réseau externe (5),
• des moyens de détermination pour déterminer la position courante (P) de l'objet mobile (1),
• des moyens de sélection pour sélectionner un point de connexion stationnaire (S5) parmi lesdits points de connexion stationnaires (S1 à S7), dans lequel la sélection dépend de la détermination de la position courante (P) de l'objet mobile (1),
• des moyens d'acheminement (R5) pour acheminer lesdites données à transférer sur le point de connexion stationnaire sélectionné (S5).

12. Système selon la revendication 11, dans lequel lesdits moyens de détermination incluent un récepteur GPS.

13. Système selon la revendication 11 ou la revendication 12, dans lequel les points de connexion stationnaires (S1 à S7) sont localisés le long d'un trajet prédéterminé de l'objet mobile (1).

14. Système selon l'une des revendications 11 à 13, dans lequel le système inclut en outre des moyens (13, 10) pour configurer un réseau dans l'objet mobile (1).

15. Système selon la revendication 14, dans lequel lesdits moyens (13, 10) pour configurer un réseau dans l'objet mobile (1) comportent au moins un point d'accès LAN sans fil (10).

16. Système selon l'une des revendications 11 à 15, dans lequel lesdits moyens de sélection incluent des moyens pour déterminer la distance entre la position courante (P) de l'objet mobile (1) et les points de connexion stationnaires (S1 à S7), la distance étant déterminée le long d'un trajet de déplacement prédéterminé de l'objet mobile (1).
